# EUROPÄISCHE PATENTSCHRIFT

(11) **EP 1 330 326 B1**
(45) Veröffentlichungstag und Bekanntmachung des Hinweises auf die Patenterteilung: **29.08.2007**
(21) Anmeldenummer: 01986281.2
(22) Anmeldetag: 02.10.2001
(51) Int. Cl.: B23K 1/018, B23K 26/14

(54) **VORRICHTUNG ZUM ENTFERNEN VON LOTMATERIAL VON EINER LÖTSTELLE**
DEVICE FOR REMOVING SOLDER MATERIAL FROM A SOLDERED JOINT
DISPOSITIF POUR ENLEVER UNE MATIERE D'APPORT DE SOUDAGE D'UN POINT SOUDE

(30) Priorität: 06.10.2000 DE 10049586
(43) Veröffentlichungstag der Anmeldung: 30.07.2003
(73) Patentinhaber: Pac Tech - Packaging Technologies GmbH, 14641 Nauen (DE)
(72) Erfinder: ZAKEL, Elke, 14612 Falkensee (DE); KASULKE, Paul, 74199 Untergruppenbach (DE); UEBEL, Oliver, 10967 Berlin (DE); TITERLE, Lars, 10999 Berlin (DE)
(74) Vertreter: von Bülow, Tam
(86) Internationale Anmeldenummer: PCT/EP2001/011418
(87) Internationale Veröffentlichungsnummer: WO 2002/028582

(56) Entgegenhaltungen:
- EP-A- 0 635 329
- WO-A-98/57774
- DE-A- 3 208 626
- DE-A- 3 822 097
- DE-A- 3 931 401
- DE-A- 4 143 414
- PATENT ABSTRACTS OF JAPAN vol. 013, no. 380 (M-863), 23. August 1989 (1989-08-23) & JP 01 133672 A (HITACHI LTD;OTHERS: 01), 25. Mai 1989 (1989-05-25)

## Beschreibung

Die vorliegende Erfindung betrifft eine Vorrichtung zum Entfernen von Lotmaterial von einer Lötstelle gemäß dem Oberbegriff des Patentanspruches 1.

Die DE 39 31 401 A1 zeigt einen Fokussierkopf für Laserschweißanlagen mit einem gasgespülten Düsenrohr zwischen einem Fokussierspiegel und einer Schweißstelle, wobei zwecks Reinhaltung des Fokussierspiegels von von der Schweißstelle emittierten Partikeln in der Wandung des Düsenrohrs nahe der Düsenspitze ein Absaugrohr angeordnet und diesem gegenüber einer Ansaugöffnung in der Wandung des Düsenrohrs vorgesehen ist, durch die ein Hauptgasstrom im Düsenrohr quer zum Strahlengang eines Lasers und ein Nebengasstrom durch den Fokussierkopf in Richtung des Strahlengangs des Lasers und entgegen dem von der Schweißstelle emittierten Partikelstrom erzeugbar ist. Durch dieses sog. Cross-Jet-Verfahren soll die fokussierende Optik des Lasers gegen Verschmutzung geschützt werden.

Aus der WO 98/57774 A1 ist eine Lötvorrichtung bekannt, mit der von einer defekten Lötstelle Lotmaterial entfernt und anschließend eine einwandfreie Lötstelle hergestellt werden kann. Diese Vorrichtung weist ein röhrenförmiges Kapillarstück auf, das an einem Ende offen ist und an die defekte Lötstelle angesetzt wird. In dem Kapillarstück ist eine Laseroptik vorgesehen, mit der zum Aufschmelzen der Lötstelle ein Laserstrahl auf die defekte Lötstelle fokussierbar ist. Vom Kapillarstück zweigen zwei Kanäle ab, nämlich ein Druckanschluß und ein mit einem Sammelbehälter verbundener Kanal. Zum Entfernen einer defekten Lötstelle wird dort zunächst das Lotmaterial mittels Laserlicht aufgeschmolzen. Anschließend wird über den Druckanschluß im Innern des Kapillarstücks ein Unterdruck erzeugt, und das flüssige Lotmaterial wird von der Lötstelle abgesaugt und durch eine Unterdruckströmung in den Sammelbehälter befördert.

Zum Sicherstellen der Betriebsbereitschaft der Vorrichtung muß die Lasereinrichtung, insbesondere die Laseroptik in einem einwandfreien Zustand sein.

Aufgabe der Erfindung ist es, eine verbesserte Vorrichtung zum Entfernen von Lotmaterial von einer Lötstelle zu schaffen, wobei insbesondere die Betriebsbereitschaft der Vorrichtung zu verbessern ist.

Der Erfindung liegt die Idee zugrunde, bei einer Lötvorrichtung, bei der zum Aufschmelzen von Lotmaterial eine Lasereinrichtung verwendet wird, eine Schutzeinrichtung vorzusehen, welche die Laseroptik vor flüssigem abgesaugten Lotmaterial schützt.

Der Schutz der Laseroptik kann durch eine Strömungsbewegung im Kapillarstück erreicht werden, durch die sichergestellt ist, daß abgesaugtes Lotmaterial nicht auf die Laseroptik auftrifft, sondern durch "Luftförderung" aus dem Kapillarstück in einen Abführkanal transportiert wird. Hierzu ist eine Unterdruckerzeugungseinrichtung vorgesehen, welche abgetragenes Lotmaterial in den Abführkanal saugt.

Für die Erzeugung einer Querströmung im Kapillarstück ist zusätzlich zu dem Abführ- bzw. "Absaugkanal" ein Zuströmkanal vorgesehen, über den Gas in das Kapillarstück einströmt. Der Zuströmkanal und der Abführkanal können beispielsweise koaxial, d.h. auf gegenüberliegenden Seiten in das Kapillarstück einmünden, wobei die beiden Kanäle unterschiedliche Querschnitte haben können. Durch den quer in das Kapillarstück einmündenden Zuströmkanal entsteht eine Querströmung, die abgesaugtes Lotmaterial zuverlässig in den Abführkanal ablenkt. Zur Erzeugung eines hinreichend hohen Unterdrucks kann an den Abführkanal eine Unterdruckerzeugungseinrichtung, z.B. eine Vakuumpumpe, angeschlossen sein.

Zusätzlich kann vorgesehen sein, daß sich die beiden Kanäle in ihren "Anschlußbereichen" zum Kapillarstück hin verjüngen, wodurch die Strömung zwischen dem Zuströmkanal und dem Abführkanal einer Venturi-Düse angenähert ist und eine hohe Querströmungsgeschwindigkeit und somit ein relativ großer Unterdruck entsteht.

Der Zuströmkanal und der Abführkanal können auch in Längsrichtung der Kapillare versetzt zueinander angeordnet sein. In diesem Fall ist der Zuströmkanal zwischen der Laseroptik und dem Abführkanal angeordnet. Auf diese Weise bildet sich vor der Laseroptik ein "Staudruckpolster" aus, d.h. eine der Bewegung des abgesaugten Lotmaterials entgegengerichtete Strömung, die ein Auftreffen auf die Laseroptik verhindert.

Alternativ oder ergänzend dazu kann der Schutz der Laseroptik auch durch eine "Blende" erreicht werden, die während des Absaugvorgangs des flüssigen Lotmaterials vor der Laseroptik angeordnet ist. Die Blende kann aus optisch transparentem Material hergestellt sein, so daß auch während des Absaugvorgangs Laserlicht zur Lötstelle gelangen kann.

Nach einer Weiterbildung der Erfindung ist eine Betätigungseinrichtung, z.B. ein Schwenkmotor oder ein Linearmotor, vorgesehen, der die Blende vor die Laseroptik plaziert, wenn Lotmaterial abgesaugt wird und zum Aufschmelzen der Lötstelle die Blende öffnet bzw. die Blende aus der Kapillare "herausfährt".

Die Vorrichtung gemäß der Erfindung kann entweder in einen separaten "Reparaturkopf" integriert sein oder in einen "Kombi-Lötkopf", wie bei der eingangs genannten WO 98/57774 A1, der sowohl zum Entfernen einer defekten Lötstelle als auch zum Löten einer Lötstelle geeignet ist. In diesem Fall weist das Kapillarstück zusätzlich einen Zuführkanal für Lotkügelchen auf und kann von Unterdruckbetrieb zum Absaugen von Lotmaterial auf Überdruckbetrieb zum Aufbringen von Lotmaterial auf ein Werkstück umgeschaltet werden.

Nach einer Weiterbildung der Erfindung ist der Innendurchmesser der Kapillare in ihrem Öffnungsbereich, d.h. in dem der abzusaugenden Lötstelle zugewandten Bereich kleiner als der Innendurchmesser der "darüberliegenden" Kapillarbereiche. Vorzugsweise ist der Durchmesser der Kapillare im Öffnungsbereich kleiner oder gleich dem Durchmesser der abzusaugenden Lötstelle.

Nach einer Weiterbildung der Erfindung ist das Längenverhältnis "Öffnung des Kapillarstückes bis Absaugkanal bzw. bis Zuströmkanal" zu "Absaugkanal bzw. Zuströmkanal bis Laseroptik" etwa größer oder gleich 80:20 bzw. 4:1, d.h. die Laseroptik hat einen gewissen Mindestabstand von den Querkanälen.

Bei der oben beschriebenen Lötvorrichtung wird das von der Lötstelle zu entfernende Lotmaterial durch Laserlicht direkt angestrahlt. Durch die absorbierte Laserenergie schmilzt das Lotmaterial und wird dann durch ein "Vakuum" bzw. durch Unterdruck abgesaugt.

Alternativ bzw. ergänzend zur Aufschmelzung mittels eines Lasers kann vorgesehen sein, daß das Lot nicht direkt erhitzt wird, sondern daß die an das Lotmaterial heranzuführende Kapillarspitze zwei Funktionen übernimmt, nämlich die einer Aufschmelzvorrichtung und die einer Absaugvorrichtung. Das Lotmaterial kann also auch ausschließlich mittels der Absaugvorrichtung bzw. Kapillare aufgeschmolzen werden, d.h. ohne Laserenergie.

Nach einer Weiterbildung der Erfindung wird die Kapillare erhitzt, beispielsweise durch Laserenergie, wobei das Lotmaterial beim Heranführen der heißen Kapillare aufgeschmolzen wird. Alternativ dazu kann um die Kapillare herum ein Werkzeug bzw. eine Heizeinrichtung vorgesehen sein, welche Wärmeenergie auf die Kapillare überträgt.

Ferner kann um die Kapillare herum ein Werkzeug bzw. eine Vorrichtung angeordnet sein, welche selbst durch eine Heizeinrichtung, wie z.B. eine elektrische Widerstandsheizung, beheizt ist und die aufgenommene Wärmeenergie auf die Kapillare überträgt. Als Heizeinrichtung für das Werkzeug bzw. die Kapillare kann beispielsweise eine elektrische Widerstandsheizung und/oder ein Heizgas verwendet werden.

Eine weitere Möglichkeit besteht darin, die Lötstelle in konventioneller Weise durch ein separates beheiztes Werkzeug, insbesondere eine Art "Lötkolben", zu entfernen, wobei das Werkzeug durch eine elektrische Widerstandsheizung, über Heizgas etc. erhitzt werden kann.

Nach einer Weiterbildung der Erfindung wird eine "Kombination aus Laserenergie und Vakuum" eingesetzt. Hierzu ist eine Doppelkapillare mit einem äußeren Kapillarröhrchen und einem vorzugsweise konzentrisch dazu angeordneten inneren Kapillarröhrchen vorgesehen. Über den zwischen den beiden Kapillarröhrchen liegenden "Ring-Zwischenraum" kann der Lötstelle Inertgas zugeführt werden. Das Inertgas, welches optional erhitzt werden kann, hat die Funktion, die Oxidation der "zu reparierenden" Lötstelle zu verhindern und somit ein erneutes Applizieren von Lötmaterial zu erleichtern. Zum Aufschmelzen des Lötmaterials wird über das innere Kapillarröhrchen Laserenergie zugeführt. Vorzugsweise wird das über den Ringzwischenraum zugeführte Inertgas erhitzt, wodurch eine Abkühlung der durch Laserenergie erhitzten Lötstelle vermieden wird.

Alternativ dazu besteht auch die Möglichkeit, das Lötmaterial ausschließlich durch zuführen erhitzten Gases aufzuschmelzen, d.h. ohne Laserenergie. Eine Aufschmelzung des Lötmaterials kann auch ausschließlich durch eine Erhitzung der Kapillare im Bereich der Kapillaröffnung erreicht werden, die dann als eine Art "Lötkolben" I! fungiert.

Im folgenden wird die Erfindung anhand von Ausführungsbeispielen im Zusammenhang mit der Zeichnung näher erläutert. Es zeigen:
- Fig. 1: eine schematische Darstellung einer Lötvorrichtung mit einem Lötkopf und einem Reparaturkopf;
- Fig. 2: ein erstes Ausführungsbeispiel der Erfindung mit koaxial angeordneten Strömungskanälen;
- Fig. 3: eine Variante der Fig. 2, wobei die Strömungskanäle die Form einer Venturi-Düse haben;
- Fig. 4: ein Ausführungsbeispiel mit axial versetzten Kanälen;
- Fig. 5: ein Kapillarstück ähnlich Fig. 2;
- Fig. 6: eine Variante mit einer Blende; und
- Fig. 7 und 8: eine Variante mit einer Doppelkapillare; und
- Fig. 9: eine Variante mit beheizbarer Kapillarspitze,
wobei darauf hingewiesen wird, daß die Ausführungsbeispiele der Figuren 6-8 für sich genommen nicht Gegenstand der Erfindung sind, sondern der Erläuterung von Teilaspekten dienen.

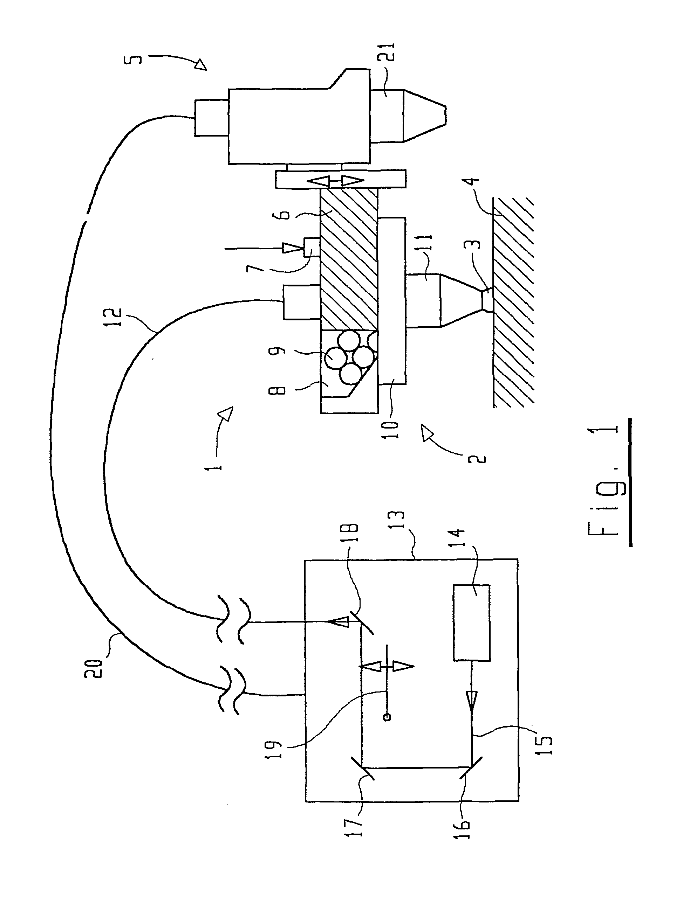

Fig. 1 zeigt eine Lötvorrichtung 1 mit einem Lötkopf 2 zum Herstellen einer Lötstelle 3 auf einem Werkstück 4. Die Lötvorrichtung 1 weist ferner einen Reparaturkopf 5 auf, mit dem defekte bzw. fehlerhafte Lötstellen vom Werkstück 4 entfernt werden können. Der Lötkopf 2 ist in eine Halteeinrichtung 6 eingesetzt, die einen Schutzgasanschluß 7 und einen Vorratsbehälter 8 zur Aufnahme von Lotkügelchen 9 aufweist. zum Herstellen einer Lötstelle 3 wird ein Lotkügelchen 9 mittels einer hier nur schematisch dargestellten Transporteinrichtung 10 in das Innere eines Kapillarstükkes 11 des Lötkopfes 2 befördert. Das Kapillarstück 11 weist an seinem dem Werkstück 4 zugewandten Ende eine Öffnung auf, über die das Lotmaterial austreten kann. Zuvor allerdings muß das zu applizierende Lotkügelchen 9 aufgeschmolzen werden. Hierfür ist im Kapillarstück 11 eine hier nicht dargestellte Laseroptik vorgesehen, die Laserlicht auf das zu applizierende Lotkügelchen 9 fokussiert. Die Laseroptik ist über einen Lichtleiter 12 mit einer Lasereinrichtung 13 verbunden. Die Lasereinrichtung 13 weist einen Laser 14 auf, der einen Laserstrahl 15 erzeugt, welcher über Umlenkspiegel 16-18 in den Lichtleiter 12 eingespeist werden kann. Ferner ist ein Schwenkspiegel 19 vorgesehen, mit dem der Laserstrahl 15 unterbrochen werden kann bzw. in einer Schwenkstellung in einen weiteren Lichtleiter 20 eingespeist werden kann, der mit einem Kapillarstück 21 des Reparaturkopfes 5 verbunden ist. Der Reparaturkopf 5 weist ebenfalls eine Laseroptik auf, die die eingespeiste Laserenergie auf eine zu entfernende Lötstelle fokussiert. Zum Entfernen einer Lötstelle wird der Reparaturkopf 5 über der Lötstelle plaziert, was im Zusammenhang mit den nachfolgenden Figuren näher erläutert wird.

Zum Herstellen einer Lötstelle wird über den Schutzgasanschluß 7 in der Kapillare 11 ein Überdruck erzeugt, der das flüssige Lotmaterial auf das Werkstück 4 drückt. Zum Entfernen einer Lötstelle wird über den Schutzgasanschluß 7 in der Kapillare 21 ein Unterdruck erzeugt, der das zuvor aufgeschmolzene flüssige Lotmaterial vom Werkstück 4 absaugt.

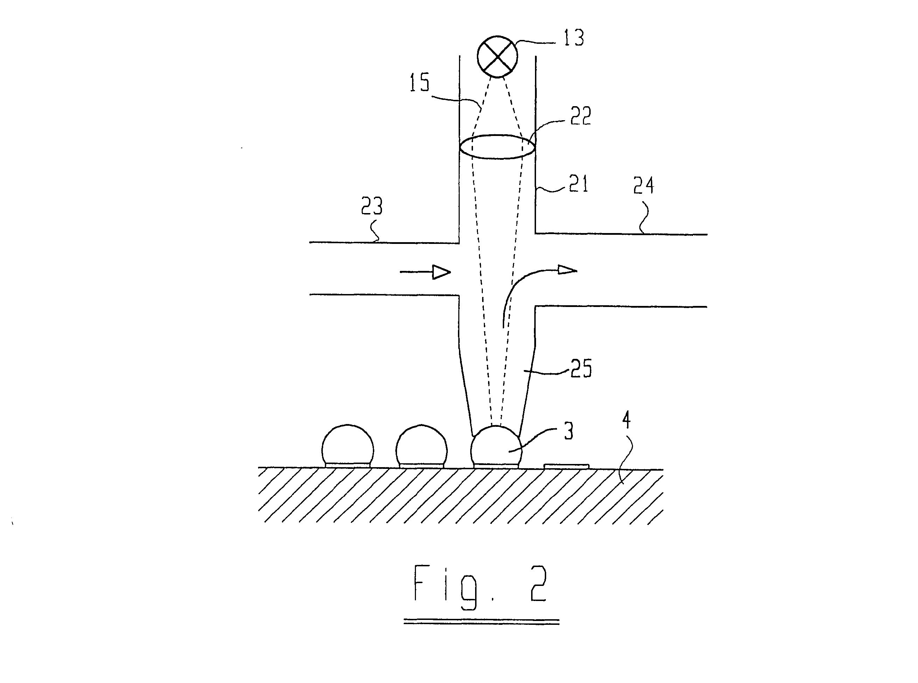

Fig. 2 zeigt in schematischer Darstellung das Kapillarstück 21 des Reparaturkopfes 5, mit dem die Lötstelle 3 vom Werkstück 4 entfernt werden kann. Das Kapillarstück 21 verjüngt sich zur Lötstelle 3 hin, wobei der Durchmesser einer am freien Ende des Kapillarstückes 21 vorgesehenen Öffnung, d.h. der Durchmesser des Kapillarstückes an dem der Lötstelle 3 zugewandten Ende kleiner ist als der Durchmesser der Lötstelle 3.

Im Kapillarstück 21 ist eine hier nur schematisch dargestellte Laseroptik 22 angeordnet, die das von der Lasereinrichtung 13 erzeugte Laserlicht 15 auf die zu entfernende Lötstelle fokussiert, wodurch das Lotmaterial aufgeschmolzen werden kann.

Das Kapillarstück 21 weist ferner einen Zuströmkanal 23 und einen Abführkanal 24 auf. Über den Zuströmkanal 23 strömt ein Gas, z.B. ein Inertgas oder Luft, in das Innere des Kapillarstückes 21 und von dort in den Abführkanal 24. Durch diese Querströmung entsteht - ähnlich wie bei einer Luftstrahlpumpe - im unteren Bereich 25 des Kapillarstükkes 21 ein Unterdruck, durch den das aufgeschmolzene Lotmaterial nach oben in das Kapillarstück 21 eingesaugt und über den Abführkanal 24 abgeführt wird.

Zum Absaugen des flüssigen Lotmaterials würde es an sich genügen, im Abführkanal 24 einen Unterdruck zu erzeugen, was jedoch dazu führen kann, daß das abgesaugte Lotmaterial nur unvollständig abgeführt wird und zum Teil auf die Laseroptik auftrifft, was unerwünscht ist. Eine Verschmutzung der Laseroptik würde nämlich zu einer "Abdunkelung" und somit zu einer Verringerung der Aufschmelzleistung führen.

Um dies zu vermeiden, ist hier der koaxial zum Abführkanal 24 angeordnete Zuströmkanal 23 vorgesehen, der eine hinreichend starke Querströmung im Kapillarstück erzeugt, durch die sichergestellt ist, daß sämtliches abgesaugtes Lotmaterial in den Abführkanal 24 gelangt und nicht auf die Laseroptik 22 auftrifft.

Um eine Gegenströmung in den unteren Bereich 25 des Kapillarstückes 21 zu vermeiden, ist hier vorgesehen, daß der Querschnitt des Zuströmkanals 23 kleiner ist als der Querschnitt des Abführkanals 24. Das aus dem Zuströmkanal 23 eintretende Gas strömt somit nahezu vollständig unmittelbar in den Abführkanal.

Da der Durchmesser der Öffnung des Kapillarstückes kleiner ist als der Durchmesser der Lötstelle 3, wird insbesondere zu Beginn des Absaugvorganges eine gute "Abdichtung" zwischen dem Kapillarstück und der Lötstelle 3 erreicht, wodurch ein ausreichend hoher Unterdruck im Kapillarstück entsteht, der zum Überwinden der Benetzungsspannung des Lotmaterials, d.h. zum Absaugen ausreicht.

Fig. 3 zeigt eine Variante der Fig. 2, bei der Anschlußbereiche 26 bzw. 27 des Zuströmkanals 23 bzw. des Abführkanals 24 zum Kapillarstück 21 hin verjüngt sind. Ähnlich wie bei einer Venturi-Düse entsteht durch diese Einschnürung eine Strömungsbeschleunigung, d.h. die Querbeschleunigung zum Abführkanal 24 hin ist noch stärker. Somit ist auch der Unterdruck in der Kapillare 21 größer. Aufgrund der stärkeren Querströmung zum Abführkanal 24 hin ist die Laseroptik 22 noch besser vor Lotmaterial geschützt. Ähnlich wie beim Ausführungsbeispiel der Fig. 2 ist auch hier der Querschnitt des Zuströmkanals 23 etwas kleiner als der Querschnitt des Abführkanals 24.

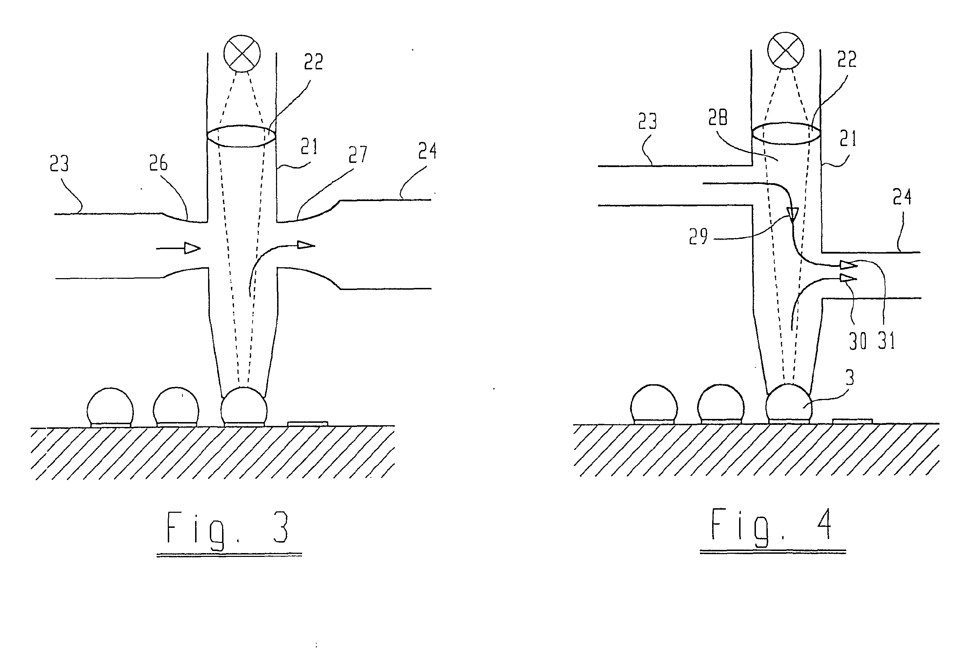

Fig. 4 zeigt eine Variante der Erfindung, bei der der Zuströmkanal 23 zur Laseroptik 22 hin versetzt angeordnet ist. In einem Bereich 28 des Kapillarstückes 21, der zwischen dem Zuströmkanal 23 und dem Abführkanal 24 liegt, entsteht eine "Gegenströmung", die zur Lötstelle 3 hin gerichtet ist und die hier durch einen Pfeil 29 angedeutet ist. Durch diese Gegenströmung entsteht vor der Laseroptik 22 ein "Luftpolster", das ein Nach-Oben-Wandern, d.h. ein Auftreffen von flüssigem Lotmaterial auf die Laseroptik 22 verhindert. In Höhe des Abführkanals 24 wird diese "Gegenströmung" zu einer Querströmung, die das abgesaugte Lotmaterial aus dem Kapillarstück 21 abtransportiert, was durch die Pfeile 30, 31 angedeutet ist.

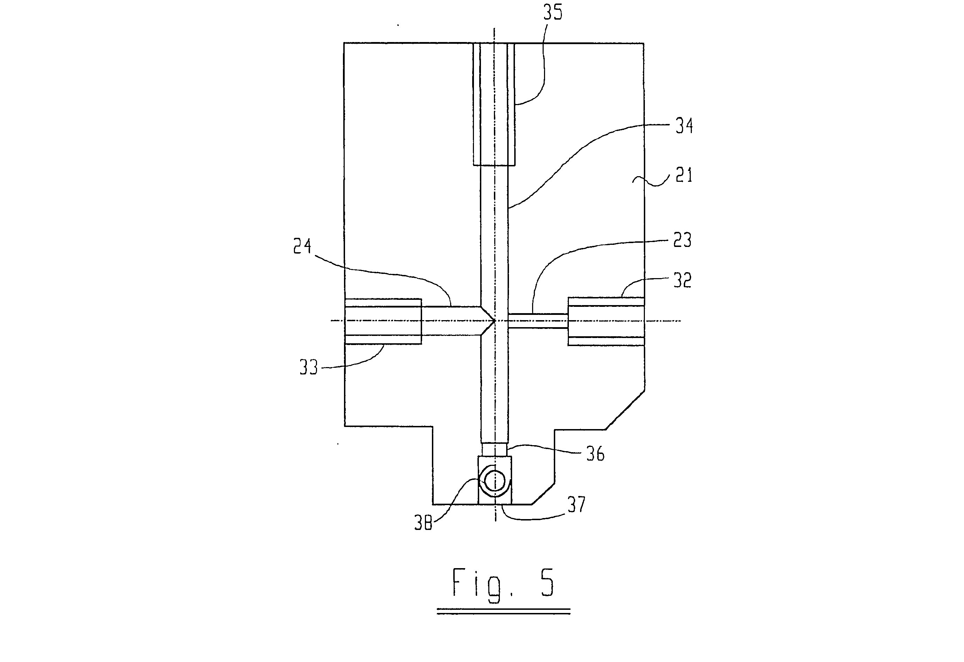

Fig. 5 zeigt ein Ausführungsbeispiel des Kapillarstückes 21, bei dem der Zuströmkanal 23 und der Abführkanal 24 koaxial angeordnet sind, wobei auch hier der Querschnitt des Zuströmkanals kleiner als der des Abführkanals ist. Der Zuströmkanal 23 und der Abführkanal 24 weisen jeweils ein Innengewinde 32, 33 für den Anschluß von Verbindungsleitungen auf. Der Zuströmkanal 23 und der Abführkanal 24 münden in einen Kapillarkanal 34, der ebenfalls ein Innengewinde 35 zum Anschluß an die Laseroptik (nicht dargestellt) aufweist. Der Kapillarkanal 34 weist im unteren Bereich eine Einschnürung 36 und im Bereich der Ansaugöffnung 37 eine Querbohrung mit Innengewinde 38 auf.

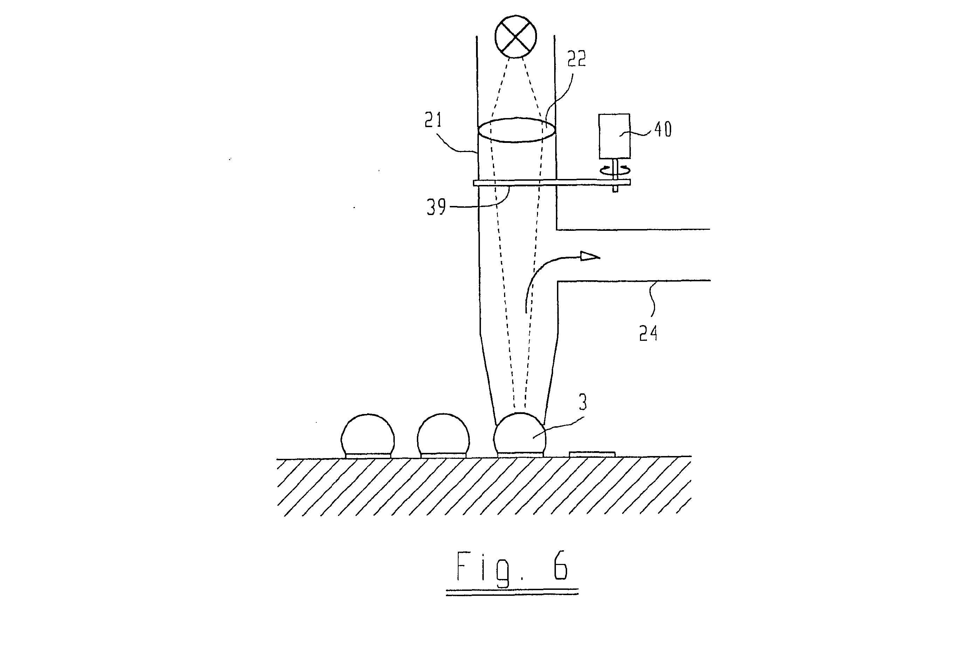

Fig. 6 zeigt ein Ausführungsbeispiel, bei dem zum Schutz der Laseroptik 22 eine Blende 39 vorgesehen ist, die hier über einen Schwenkmotor 40 in das Kapillarstück 21 einschwenkbar ist. Im Unterschied zu den Ausführungsbeispielen der Figuren 2-5 ist hier kein Zuströmkanal, sondern lediglich der Abführkanal 24 vorgesehen, in dem ein Unterdruck erzeugt wird. Sollte das abgesaugte Lotmaterial nicht vollständig in den Abführkanal 24 gelangen, so wird es spätestens an der Blende 39 abgefangen.

Die Blende 39 kann beispielsweise aus einem lichtdurchlässigen Material hergestellt sein, so daß auch in "eingeschwenktem" Zustand, d.h. während des Absaugvorganges die Lötstelle 3 mit Laserlicht bestrahlt werden kann.

Selbstverständlich ist es auch bei den Ausführungsbeispielen der Figuren 2-5 möglich, zusätzlich eine Blende vorzusehen.

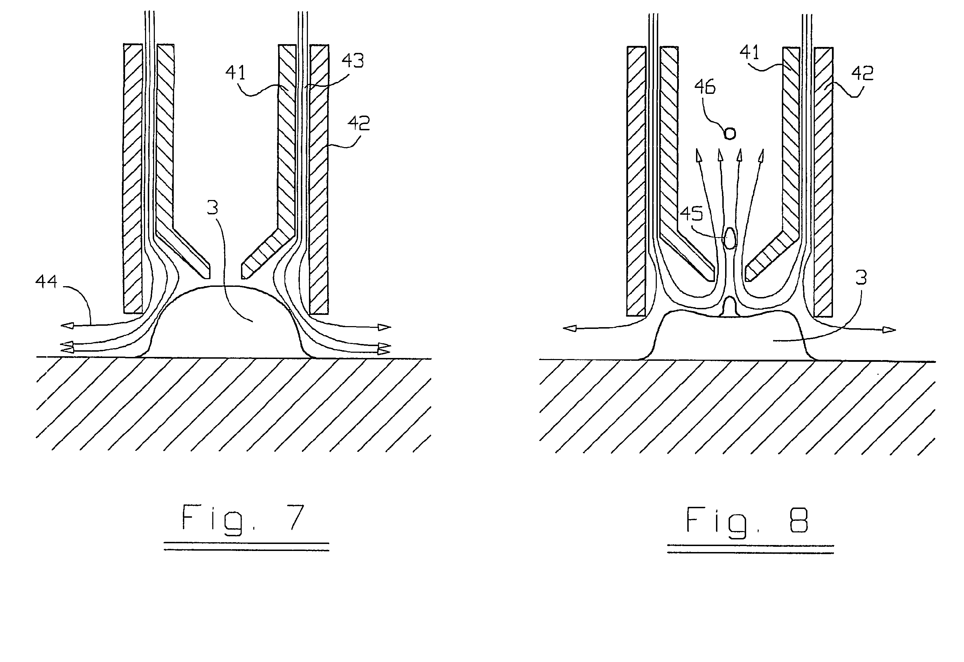

Die Fig. 7 und 8 zeigen jeweils ein Ausführungsbeispiel mit einer sog. "Doppelkapillare".

Die Doppelkapillare besteht aus einem inneren Kapillarröhrchen 41 und einem konzentrisch dazu angeordneten äußeren zylindrischen Kapillarröhrchen 42. Zwischen den beiden Kapillarröhrchen 41 und 42 befindet sich ein ringzylindrischer Zwischenraum 43. Das innere Kapillarröhrchen 41 entspricht in Form und Aufbau im wesentlichen dem der Fig. 1 bis 6. Das äußere Kapillarröhrchen 42 ist etwas länger als das innere Kapillarröhrchen 41, d.h. es steht etwas über die Öffnung des inneren Kapillarröhrchens 41 hervor.

In Fig. 7 wird der Lötstelle 3 über den ringförmigen Zwischenraum 43 Inertgas bzw. Schutzgas zugeführt, was hier schematisch durch Strömungslinien 44 angedeutet ist. Das Inertgas 44 umströmt die Oberfläche der Lötstelle 3 und strömt dann primär seitlich neben der Lötstelle 3 aus der Doppelkapillare heraus.

Vorteilhafterweise wird ein vorgeheiztes Inertgas verwendet. Das Inertgas dient dann einerseits dazu, die Lötstelle 3 vor einer oxidation zu schützen. Zusätzlich wird der Lötstelle über das Inertgas Wärme zugeführt. Das Inertgas kann dabei so stark aufgeheizt sein, daß die Lötstelle durch das sie umströmende Inertgas lokal aufgewärmt und bis auf Schmelztemperatur erhitzt wird. Bei hinreichend hoher Inertgastemperatur kann die Lötstelle sogar ausschließlich durch heißes Inertgas aufgeschmolzen werden, d.h. ohne zusätzliche Wärmezufuhr über einen Laser.

Alternativ bzw. ergänzend dazu kann jedoch auch hier eine Aufschmelzung durch Laserlicht entsprechend den in den Fig. 1 bis 6 gezeigten Ausführungsbeispielen vorgesehen sein. Die Aufheizung kann so erfolgen, daß durch den Innenraum des inneren Kapillarröhrchens 41 Laserlicht pulsweise auf die Lötstelle 3 "geschossen" wird.

Ferner kann alternativ bzw. ergänzend dazu eine Heizeinrichtung (nicht dargestellt) vorgesehen sein, um das Werkzeug, d.h. die Kapillare innen und/oder außen aufzuheizen. Konkreter gesagt werden das innere Kapillarröhrchen 41 und/oder das äußere Kapillarröhrchen 42 aufgeheizt. In diesem Fall kann eine Aufschmelzung des Lotmaterials allein oder unterstützend durch die heiße Kapillare erreicht werden. Eine entsprechende Aufheizung der Kapillare ist selbstverständlich auch bei den Ausführungsbeispielen der Fig. 1 bis 6 möglich.

Zusammenfassend gesagt ist eine Aufschmelzung des Lotmaterials möglich durch
a) heißes Gas, insbesondere heißes Inertgas oder
b) Bestrahlen mit Laserlicht, insbesondere pulsweises Bestrahlen, oder
c) ein Heizwerkzeug, insbesondere durch ein Aufheizen der Kapillare, oder
d) Kombinationen der "Aufheizvarianten" a), b) und c).

Wenn die Lötstelle 3 - wie in Fig. 7 gezeigt - hinreichend erhitzt ist, so daß das Lötmaterial schmilzt, wird das Lötmaterial abgesaugt.

Dies ist in Fig. 8 dargestellt. Hierzu wird im Inneren des inneren Kapillarröhrchens 41 ein Unterdruck bzw. Vakuum erzeugt, was im Zusammenhang mit den Fig. 1 bis 6 ausführlich bereits beschrieben wurde. Gleichzeitig wird die Lötstelle 3 durch heißes Inertgas und/oder durch Laserlicht und/oder durch Aufheizen der Kapillarröhrchen 41 bzw. 42 flüssig gehalten. Das Absaugen des Lotmaterials ist hier schematisch durch Lötkügelchen 45, 46 dargestellt, die im Luftstrom nach oben befördert werden.

Die Verflüssigung des Lotmaterials muß also vor bzw. während des Absaugvorganges, d.h. vor bzw. während des Applizierens des Vakuums im Inneren des inneren Kapillarröhrchens 41 erfolgen, beispielsweise durch einen Laserpuls bzw. durch ein aufgeheiztes Werkzeug (Kapillare). Auch bei einer "Impulsheizung" müssen der Heizvorgang und die Applizierung des Vakuums so gesteuert werden, daß genau zu dem Zeitpunkt der Applizierung des Vakuums das Lotmaterial verflüssigt wird. Hinsichtlich der zeitlichen Reihenfolge der Applizierung des Vakuums gibt es folgende Möglichkeiten:
a) Das Inertgas und das Vakuum werden gleichzeitig appliziert. In diesem Fall muß das Lotmaterial bereits flüssig sein.
b) Das Inertgas und das Vakuum werden voneinander zeitlich versetzt appliziert.

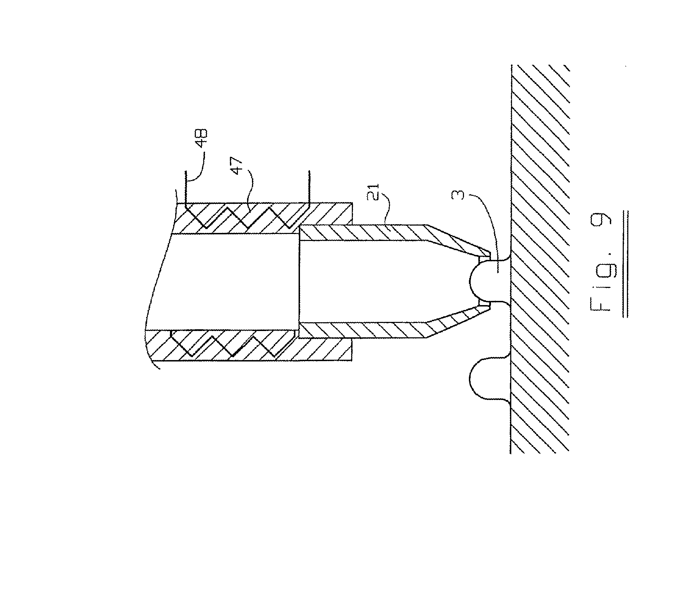

Fig. 9 zeigt ein Ausführungsbeispiel, bei dem die Kapillare 21 in thermischem Kontakt mit einem zylindrischen Element 47 ist, welches die Kapillare 21 hier teilweise umschließt. In dem zylindrischen Element 47 ist eine Heizeinrichtung vorgesehen, was hier schematisch durch eine Heizwendel 48 angedeutet ist. Über die Heizwendel 48 wird dem zylindrischen Teil 47 Wärmeenergie zugeführt.

Alternativ dazu kann die Aufheizung des zylindrischen Elements 47 auch durch Laserenergie erfolgen. Die Wärmeenergie wird auf die Kapillare 21 und von ihr auf die Lötstelle 3 übertragen, was zur Aufschmelzung der Lötstelle 3 führt. Die Lötstelle 3 kann auch ausschließlich durch eine Wärmezufuhr über die Kapillare 21 aufgeschmolzen werden. Selbstverständlich kann eine zusätzliche Wärmezufuhr über Laserlicht vorgesehen sein.

Ferner kann die in Fig. 9 gezeigte Heizeinrichtung 48 auch bei den anderen Ausführungsbeispielen, insbesondere bei den Fig. 7, 8 vorgesehen sein.

## Patentansprüche

1. Vorrichtung zum Entfernen von Lotmaterial von einer Lötstelle mit
einer Kapillare, die eine Kapillarenöffnung aufweist, welche an die Lötstelle ansetzbar ist,
einer Schmelzeinrichtung zum Aufschmelzen des Lotmaterials,
einer Unterdruckerzeugungseinrichtung, mit der in der Kapillare ein Unterdruck erzeugbar ist, zum Absaugen des aufgeschmolzenen flüssigen Lotmaterials von der Lötstelle, und
einem aus der Kapillare herausgeführten Abführkanal zum Abführen des abgesaugten Lotmaterials aus der Kapillare,
**dadurch gekennzeichnet,**
**daß** zwischen der Kapillarenöffnung (37) und der Schmelzeinrichtung (22) eine Schutzeinrichtung (23, 24; 39) vorgesehen ist, die verhindert, daß abgesaugtes Lotmaterial zur Schmelzeinrichtung (22) gelangt, und
**daß** die Schutzeinrichtung durch den Abführkanal (24) und einen in die Kapillare (21) mündenden Zuströmkanal (23) gebildet ist, und
**daß** der Zuströmkanal (23) und der Abführkanal (24) die Unterdruckerzeugungseinrichtung bilden.

2. Vorrichtung nach Anspruch 1, **dadurch gekennzeichnet, daß** der Zuströmkanal (23) und der Abführkanal (24) im wesentlichen quer in die Kapillare (21) münden.

3. Vorrichtung nach einem der Ansprüche 1 oder 2, **dadurch gekennzeichnet,**
**daß** der zuströmkanal (23) und der Abführkanal (24) koaxial zueinander sind, und vorzugsweise der Zuströmkanal (23) und/oder der Abfuhrkanal (24) in ihren Verbindungsbereichen mit der Kappilare düsenartig verjüngt sind.

4. Vorrichtung nach einem der Ansprüche 3 oder 4, **dadurch gekennzeichnet,**
**daß** der Zuströmkanal (23) zur Schmelzeinrichtung hin versetzt bezüglich des Abführkanals (24) angeordnet ist.

5. Vorrichtung nach einem der Ansprüche 1 bis 4, **dadurch gekennzeichnet,**
**daß** der Querschnitt des Zuströmkanals (23) kleiner als der Querschnitt des Abführkanals (24) ist.

6. Vorrichtung nach einem der Ansprüche 1 bis 5, **dadurch gekennzeichnet,**
**daß** eine Blende (39) vorgesehen ist, die zwischen der Kapillarenöffnung (37) und der Schmelzeinrichtung (22) plazierbar ist.

7. Vorrichtung nach Anspruch 6, **dadurch gekennzeichnet, daß** eine Betätigungsvorrichtung (40) zum Öffnen bzw. Schließen der Blende (39) vorgesehen ist.

8. Vorrichtung nach einem der Ansprüche 6 oder 7, **dadurch gekennzeichnet,**
**daß** die Blende aus einem optisch transparenten Material besteht.

9. Vorrichtung nach einem der Ansprüche 1 bis 8, **dadurch gekennzeichnet,**
**daß** der Durchmesser der Kapillare größer ist als der Durchmesser der Kapillarenöffnung.

10. Vorrichtung nach einem der Ansprüche 1 bis 9, **dadurch gekennzeichnet,**
**daß** die Kapillare eine Doppelkappilare ist, mit einem inneren Kapillarröhrchen (41) und einem äußeren Kapillarröhrchen (42), wobei die beiden Kapillarröhrchen (41, 42) im wesentlichen koaxial zueinander angeordnet sind, mit einem zwischen ihnen liegenden ringzylindrischen Zwischenraum (43).

11. Vorrichtung nach Anspruch 10, **dadurch gekennzeichnet, daß** der ringzylindrische Zwischenraum (43) ein Strömungskanal für ein Fluid, insbesondere für ein Inertgas ist.

12. Vorrichtung nach einem der Ansprüche 10 oder 11, **dadurch gekennzeichnet,**
**daß** der Zwischenraum (43) einen Gasanschluß aufweist und daß der Kapillaröffnung bzw. der Lötstelle (3) über den Zwischenraum (43) Gas zuführbar ist.

13. Vorrichtung nach einem der Ansprüche 10 bis 12, **dadurch gekennzeichnet,**
**daß** die Unterdruckerzeugungseinrichtung an den Innenraum des inneren Kapillarröhrchens (41) angeschlossen ist, zum Erzeugen eines Unterdrucks in dem inneren Kapillarröhrchen (41).

14. Vorrichtung nach einem der Ansprüche 10 bis 13, **dadurch gekennzeichnet,**
**daß** der Durchmesser der Öffnung des inneren Kapillarröhrchens (41) kleiner ist als der Durchmesser des übrigen inneren Kapillarröhrchens (41).

15. Vorrichtung nach einem der Ansprüche 10 bis 14, **dadurch gekennzeichnet,**
**daß** eine Heizeinrichtung vorgesehen ist, zum Aufheizen des ringzylindrischen Zwischenraumes (43) und eines darin strömenden Fluids, wobei die Doppelkapillare mit dem darin strömenden Fluid als Schmelzeinrichtung fungiert.

16. Vorrichtung nach einem der Ansprüche 10 bis 15, **dadurch gekennzeichnet,**
**daß** über den Zwischenraum (43) ein Inertgas zugeführt wird und daß zum Aufschmelzen des Lotmaterials (3) eine Laserschmelzeinrichtung vorgesehen ist, wobei das Lotmaterial (3) über den Innenraum des inneren Kapillarröhrchens (41) pulsweise mit Laserlicht bestrahlt wird.

17. Vorrichtung nach einem der Ansprüche 1. bis 16, **dadurch gekennzeichnet,**
**daß** die Schmelzeinrichtung eine Laseroptik (22) aufweist, die in der Kapillare (21, 41) bzw. in einem mit der Kapillare (21, 41) verbundenen Kopfstück (5) angeordnet ist.

18. Vorrichtung nach einem der Ansprüche 1 bis 17, **dadurch gekennzeichnet,**
**daß** die Kapillare (21) selbst als Schmelzeinrichtung fungiert, wobei im Bereich der Kapillaröffnung eine Heizeinrichtung (48) angeordnet ist, zum Aufheizen der Kapillare (21).

19. Vorrichtung nach Anspruch 18, **dadurch gekennzeichnet, daß** die Heizeinrichtung zum Aufheizen der Kapillare ein Laser ist.

20. Vorrichtung nach Anspruch 18 oder 19, **dadurch gekennzeichnet,**
**daß** die Heizeinrichtung zum Aufheizen der Kapillare (21) außen an der Kapillare (21) angeordnet ist und die Kapillare (21) zumindest teilweise umschließt, wobei der Wärmeübergang von der Heizeinrichtung (48) auf die Kapillare (21) im wesentlichen durch Wärmeleitung erfolgt.

21. Vorrichtung nach einem der Ansprüche 18 bis 20, **dadurch gekennzeichnet,**
**daß** die Heizeinrichtung zum Aufheizen der Kapillare (21) eine elektrische widerstandsheizung (48) ist.

22. Vorrichtung nach einem der Ansprüche 1 bis 21, **dadurch gekennzeichnet,**
**daß** die Schmelzeinrichtung zum Aufschmelzen des Lotmaterials (3) eine Vorrichtung ist,
a) zum Zuführen heißen Gases zur Lötstelle oder
b) zum pulsweisen Bestrahlen der Lötstelle mit Laserlicht oder
c) die ein beheiztes Element aufweist, für eine Wärmezufuhr zur Lötstelle.

23. Vorrichtung nach Anspruch 22, **dadurch gekennzeichnet, daß** die Schmelzeinrichtung eine Kombination der Merkmale a), b) bzw. c) aufweist.

24. Vorrichtung nach einem der Ansprüche 1 bis 21, **dadurch gekennzeichnet,**
**daß** eine Einrichtung zum Applizieren von Lotmaterial auf einem Werkstück (4) vorgesehen ist.

## Claims

1. Device for removing solder material from a soldered joint with
a capillary having a capillary opening, which is applicable to the soldered joint,
a melting device for melting the solder material,
a negative pressure generating device by which a negative pressure in the capillary can be generated, for suctioning the melted liquid solder material from the solder joint, and
an outlet channel leading out of the capillary for evacuating the suctioned solder material from the capillary,
**characterized in that** a protective device (23, 24; 39) is provided between the capillary opening (37) and the melting device (22), which is preventing the suctioned solder material from reaching the melting device (22), and **in that** the protective device is formed by the outlet channel (24) and an inlet channel (23) emptying into the capillary tube (21) and
**in that** the inlet channel (23) and the outlet channel (24) are forming said negative pressure generating device.

2. Device according to claim 1, **characterized in that** the inlet channel (23) and the outlet channel (24) are emptying basically transversely into the capillary (21).

3. Device according to one of claims 1 or 2, **characterized in that** the inlet channel (23) and the outlet channel (24) are coaxial to each other and preferably the inlet channel (23) and/or the outlet channel (24) are tapering within their connection areas in a nozzle like manner.

4. Device according to one of claims 2 or 4, **characterized in that** the inlet channel (23) toward the melting device is in a staggered arrangement relative to the outlet channel (24).

5. Device according to one of claim 1 to 4, **characterized in that** the cross-section of the inlet channel (23) is smaller than the cross-section of the outlet channel (24).

6. Device according to one of 1 to 5, **characterized in that** a diaphragm (39) is provided which can be placed between the capillary opening (37) and the melting device (22).

7. Device according to claim 6, **characterized in that** an actuating device (40) is provided for opening and closing the diaphragm (39).

8. Device according to one of claims 6 or 7, **characterized in that** the diaphragm (39) is made of an optically transparent material.

9. Device according to one of claims 1 to 8, **characterized in that** the diameter of the capillary is greater than the diameter of the capillary opening.

10. Device according to one of claims 1 to 9, **characterized in that** the capillary is a double capillary with an inner capillary tube (41) and an outer capillary tube (42), the two capillary tubes (41, 42) being arranged basically coaxial to each other having an annular cylindrical space (43) lying between them.

11. Device according to claim 10, **characterized in that** the annular cylindrical space (43) is a flow channel for a fluid, in particular for an inert gas.

12. Device according to one of claims 10 or 11, **characterized in that** the space (43) has a gas connection and **in that** the gas can be supplied through the space (43) to the capillary opening and the soldered joint (3), respectively.

13. Device according to one of claims 10 to 12, **characterized in that** the negative pressure generating device is connected to the interior of the inner capillary tube (42) for generating a negative pressure within the inner capillary tube (41).

14. Device according to one of claims 10 to 13, **characterized in that** the diameter of the opening of the inner capillary tube (41) is smaller than the diameter of the remaining inner capillary tube (41).

15. Device according to one of claims 1 to 14, **characterized in that** a heating device is provided for heating the annular cylindrical space (43) and a fluid flowing therein, wherein the double capillary with the fluid flowing therein is functioning as a melting device.

16. Device according to one of claims 1 to 15, **characterized in that** an inert gas is supplied through the space (43) and a laser melting device is provided for melting the solder material (3), wherein the solder material (3) is pulse-irradiated with laser light through the interior of the inner capillary tube (41).

17. Device according to one of claims 1 to 16, **characterized in that** the melting device comprises a laser lens system (22) arranged in the capillary (21, 41) and in a head piece (5) connected with the capillary (21, 41), respectively.

18. Device according to one of claims 1 to 17, **characterized in that** the capillary itself acts as a melting device, wherein a heating device (48) is arranged in the area of the capillary opening for heating the capillary (21).

19. Device according to claim 18, **characterized in that** the heating device for heating the capillary is a laser.

20. Device according to claims 18 or 19, **characterized in that** the heating device for heating the capillary (21) is arranged outside the capillary (21) and is surrounding the capillary (21) at least partially, wherein a heat transfer from the heating device (48) to the capillary (21) takes place basically by heat conduction.

21. Device according to one of claims 18 to 20, **characterized in that** the heating device for heating the capillary (21) is an electrical resistance heater (48).

22. Device according to one of claims 1 to 21, **characterized in that** the melting device for melting the solder material (3) is a device for,
a) supplying hot gases to the soldered joint or
b) pulsed radiation of the soldered joint with laser light or
c) is comprising a heated element for supplying heat to the soldered joint.

23. Device according to claim 22, **characterized in that** the melting device comprises a combination of the features a), b) and c), respectively.

24. Device according to one of claims 1 to 21, **characterized in that** a device for applying solder material onto a workpiece (4) is provided.

## Revendications

1. Dispositif destiné à enlever une matière d'apport de soudage d'un point soudé, comprenant
un capillaire présentant un orifice capillaire qui peut être appliqué sur le point soudé,
un système de fusion destiné à faire fondre la matière d'apport de soudage,
un générateur de dépression permettant de produire une dépression dans le capillaire pour aspirer la matière d'apport de soudage liquide fondue du point soudé, et
un canal d'évacuation partant du capillaire pour évacuer la matière d'apport de soudage aspirée du capillaire,
**caractérisé en ce**
**qu'**est prévu un système de protection (23, 24 ; 39) entre l'orifice capillaire (37) et le système de fusion (22), lequel système empêche la matière d'apport de soudage aspirée d'arriver au système de fusion (22), et en ce que le système de protection est formé par le canal d'évacuation (24) et par un canal d'afflux (23) débouchant dans le capillaire (21), et
en ce que le canal d'afflux (23) et le canal d'évacuation (24) forment le générateur de dépression.

2. Dispositif selon la revendication 1, **caractérisé en ce que** le canal d'afflux (23) et le canal d'évacuation (24) débouchent dans le capillaire (21) de manière sensiblement transversale.

3. Dispositif selon l'une quelconque des revendications 1 ou 2, **caractérisé en ce**
**que** le canal d'afflux (23) et le canal d'évacuation (24) sont coaxiaux entre eux et en ce que le canal d'afflux (23) et/ou le canal d'évacuation (24) se présentent de préférence sous forme de buse conique dans leur région de jonction avec le capillaire.

4. Dispositif selon l'une quelconque des revendications 3 ou 4, **caractérisé en ce**
**que** le canal d'afflux (23) vers le système de fusion est disposé de manière décalée par rapport au canal d'évacuation (24).

5. Dispositif selon l'une quelconque des revendications 1 à 4, **caractérisé en ce**
**que** la section du canal d'afflux (23) est plus petite que la section du canal d'évacuation (24).

6. Dispositif selon l'une quelconque des revendications 1 à 5, **caractérisé en ce**
**qu'**un diaphragme (39) est prévu, lequel peut être placé entre l'orifice capillaire (37) et le système de fusion (22).

7. Dispositif selon la revendication 6, **caractérisé en ce**
**qu'**un dispositif de commande (40) est prévu pour ouvrir et/ou fermer le diaphragme (39).

8. Dispositif selon l'une quelconque des revendications 6 ou 7, **caractérisé en ce**
**que** le diaphragme se compose d'un matériau optique transparent.

9. Dispositif selon l'une quelconque des revendications 1 à 8, **caractérisé en ce**
**que** le diamètre du capillaire est plus grand que le diamètre de l'orifice capillaire.

10. Dispositif selon l'une quelconque des revendications 1 à 9, **caractérisé en ce**
**que** le capillaire est un capillaire double comportant un tube capillaire interne (41) et un tube capillaire externe (42), les deux tubes capillaires (41, 42) étant disposés de manière sensiblement coaxiale l'un par rapport à l'autre, avec un espace intermédiaire cylindrique (43) séparant ces derniers.

11. Dispositif selon la revendication 10, **caractérisé en ce**
**que** l'espace intermédiaire cylindrique (43) est un canal d'écoulement pour un fluide et en particulier, pour un gaz inerte.

12. Dispositif selon l'une quelconque des revendications 10 ou 11, **caractérisé en ce**
**que** l'espace intermédiaire (43) présente un raccord d'alimentation en gaz et en ce qu'un gaz peut être acheminé à l'orifice capillaire et/ou au point soudé (3) par le biais de l'espace intermédiaire (43).

13. Dispositif selon l'une quelconque des revendications 10 à 12, **caractérisé en ce**
**que** le générateur de dépression est raccordé à l'intérieur du tube capillaire interne (41), pour produire une dépression dans le tube capillaire interne (41).

14. Dispositif selon l'une quelconque des revendications 10 à 13, **caractérisé en ce**
**que** le diamètre de l'orifice du tube capillaire interne (41) est plus petit que le diamètre du reste du tube capillaire interne (41).

15. Dispositif selon l'une quelconque des revendications 10 à 14, **caractérisé en ce**
**qu'**un dispositif de chauffage est prévu pour chauffer l'espace intermédiaire cylindrique (43) et un fluide circulant dans celui-ci, le capillaire double avec le fluide circulant dans celui-ci servant de système de fusion.

16. Dispositif selon l'une quelconque des revendications 10 à 15, **caractérisé en ce**
**qu'**un gaz inerte est acheminé par le biais de l'espace intermédiaire (43) et en ce qu'un système de fusion par laser est prévu pour faire fondre la matière d'apport de soudage (3), la matière d'apport de soudage (3) étant irradiée de manière impulsionnelle par une lumière laser par le biais de l'intérieur du tube capillaire interne (41).

17. Dispositif selon l'une quelconque des revendications 1 à 16, **caractérisé en ce**
**que** le système de fusion présente une optique laser (22), qui est disposée dans le capillaire (21, 41) et/ou dans une tête (5) reliée au capillaire (21, 41).

18. Dispositif selon l'une quelconque des revendications 1 à 17, **caractérisé en ce**
**que** le capillaire (21) sert lui-même de système de fusion, un dispositif de chauffage (48) étant disposé dans la région de l'orifice capillaire, pour chauffer le capillaire (21).

19. Dispositif selon la revendication 18, **caractérisé en ce**
**que** le dispositif de chauffage destiné à chauffer le capillaire est un laser.

20. Dispositif selon la revendication 18 ou 19, **caractérisé en ce**
**que** le dispositif de chauffage destiné à chauffer le capillaire (21) est disposé à l'extérieur du capillaire (21) et entoure au moins partiellement le capillaire (21), le transfert de chaleur du dispositif de chauffage (48) au capillaire (21) s'effectuant essentiellement par conduction thermique.

21. Dispositif selon l'une quelconque des revendications 18 à 20, **caractérisé en ce**
**que** le dispositif de chauffage destiné à chauffer le capillaire (21) est un chauffage à résistance électrique (48).

22. Dispositif selon l'une quelconque des revendications 1 à 21, **caractérisé en ce**
**que** le système de fusion destiné à faire fondre la matière d'apport de soudage (3) est un dispositif
a) destiné à acheminer un gaz chaud au point soudé ou
b) destiné à irradier le point soudé de manière impulsionnelle avec de la lumière laser ou
c) présentant un élément chauffé pour acheminer de la chaleur au point soudé.

23. Dispositif selon la revendication 22, **caractérisé en ce**
**que** le système de fusion présente une combinaison des caractéristiques a), b) et/ou c).

24. Dispositif selon l'une quelconque des revendications 1 à 21, **caractérisé en ce**
**qu'**un dispositif destiné à appliquer une matière d'apport de soudage sur une pièce à travailler (4) est prévu.
